# EUROPÄISCHE PATENTSCHRIFT

(11) **EP 1 561 017 B1**
(45) Veröffentlichungstag und Bekanntmachung des Hinweises auf die Patenterteilung: **29.03.2006**
(21) Anmeldenummer: 03810366.9
(22) Anmeldetag: 10.07.2003
(51) Int. Cl.: F01N 3/20, B01D 53/94, B01D 53/56, B01D 53/90

(54) **VERFAHREN ZUR NACHBEHANDLUNG VON ABGASEN UND ANORDNUNG HIERZU**
METHOD FOR AFTERTREATMENT OF EXHAUST GASES AND EXHAUST GAS AFTERTREATMENT DEVICE
PROCEDE DE POST-TRAITEMENT DE GAZ D'ECHAPPEMENT ET DISPOSITIF CORRESPONDANT

(30) Priorität: 06.11.2002 DE 10251472
(43) Veröffentlichungstag der Anmeldung: 10.08.2005
(73) Patentinhaber: ROBERT BOSCH GMBH, 70442 Stuttgart (DE)
(72) Erfinder: MAYER, Thorsten, 67551 Worms (DE); WALZ, Christian, 71229 Loenberg (DE); SCHALLER, Johannes, 71229 Leonberg (DE)
(86) Internationale Anmeldenummer: PCT/DE2003/002311
(87) Internationale Veröffentlichungsnummer: WO 2004/042207

(56) Entgegenhaltungen:
- EP-A- 0 894 523
- WO-A-99/56858
- DE-A- 19 913 462
- US-B1- 6 343 468

## Beschreibung

### Stand der Technik

Die Erfindung geht aus von einem Verfahren bzw. einer Anordnung zur Nachbehandlung des Abgases einer Brennkraftmaschine nach der Gattung der unabhängigen Ansprüche. Aus der DE 197 20 209 ist bereits ein derartiges Verfahren bekannt, bei dem Ammoniak in den Abgastrakt vor einem Katalysator zur selektiven katalytischen Reduktion eingeführt wird.

### Vorteile der Erfindung

Das erfindungsgemäße Verfahren bzw. die erfindungsgemäße Anordnung mit den kennzeichnenden Merkmalen der unabhängigen Ansprüche haben demgegenüber den Vorteil, bei minimiertem Energiebedarf zur Bereitstellung eines niedertemperaturaktiven Hilfsmittels eine hinreichende selektive katalytische Reduktion von Stickoxiden zu gewährleisten. Der Vorteil der Verwendung zweier verschiedener Hilfsmittel besteht insbesondere darin, dass nur eines der beiden Hilfsmittel insbesondere in einem Temperaturbereich von zirka 100 Grad Celsius bis zirka 180 Grad Celsius niedertemperaturaktiv sein muss und dass dieses zweite Hilfsmittel nur für solche Betriebssituationen unter Aufwendung von Energie bereitgestellt werden muss, in denen das erste Hilfsmittel keine hinreichende Abgasentstickung gewährleistet.

Durch die in den abhängigen Ansprüchen aufgeführten Maßnahmen sind vorteilhafte Weiterbildungen und Verbesserungen der in den unabhängigen Ansprüchen angegebenen Verfahren bzw. Anordnung möglich.

Besonders vorteilhaft ist es, eine Umwandlung des ersten Hilfsmittels in ein zweites Hilfsmittel nur in einem sogenannten Normalbetrieb des Kraftfahrzeugs vorzusehen, um für einen erneuten Start der Brennkraftmaschine in kaltem Zustand bereits den dann erforderlichen niedertemperaturaktiven zweiten Hilfsstoff zur Verfügung zu haben. Eine Initiierung der Umwandlung bei warmer Brennkraftmaschine hat darüber hinaus den Vorteil, dass, falls erforderlich, die Motorabwärme bzw. die Wärme des Abgases dazu genutzt werden kann, die chemische Umwandlung zu beschleunigen. Jedenfalls wird eine Fahrzeugbatterie auch weniger belastet, wenn nicht gleich beim Start der Brennkraftmaschine zusätzliche Verbraucher, wie beispielsweise eine elektrische Heizvorrichtung für einen chemischen Reaktor, mit elektrischer Energie versorgt werden müssen.

Des weiteren ist es vorteilhaft, einen Zwischenspeicher vorzusehen, der so bemessen ist, dass die in ihm gespeicherte Menge an zweitem Hilfsstoff ausreicht, um eine Abgasentstickung bei besonderen Fahrzeugbedingungen zu gewährleisten, in denen der erste Hilfsstoff keine ausreichenden Resultate erzielen würde.

Des weiteren ist es vorteilhaft, die chemische Umwandlung nur so lange durchzuführen, bis der Zwischenspeicher gefüllt ist; dies gewährleistet einen ökonomischen Einsatz gegebenenfalls erforderlicher elektrischer Energie.

Weitere Vorteile ergeben sich aus weiteren in den abhängigen Ansprüchen und in der Beschreibung genannten Merkmalen.

### Zeichnung

Ausführungsbeispiele der Erfindung sind in der Zeichnung dargestellt und in der nachfolgenden Beschreibung näher erläutert.

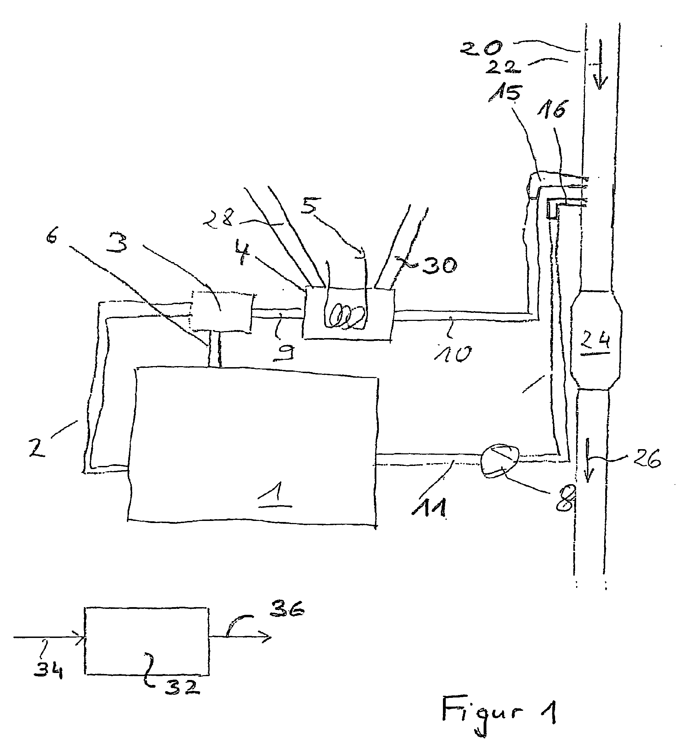

Die einzige Figur 1 zeigt eine Anordnung zur Nachbehandlung des Abgases einer Brennkraftmaschine mittels des Verfahrens der selektiven katalytischen Reduktion.

### Beschreibung der Ausführungsbeispiele

In der Figur 1 ist eine Anordnung zur Abgasnachbehandlung mit zwei Dosiereinrichtungen 15 und 16 dargestellt, die in eine Abgasleitung 20 hineinragen. Das Bezugszeichen 22 markiert die Strömungsrichtung des von einer Brennkraftmaschine stammenden Abgases, d.h., die als elektrisch ansteuerbare Ventile ausgebildeten Dosiereinrichtungen sind stromaufwärts eines Katalysators zur selektiven katalytischen Reduktion (SCR-Katalysator) angeordnet. Hinter dem SCR-Katalysator 24 verlässt entsticktes Abgas 26 gegebenenfalls unter Durchströmung weiterer Anordnungen zur Abgasnachbehandlung das Kraftfahrzeug und gelangt ins Freie. Die Anordnung umfasst einen beispielsweise eine Harnstoff-Wasser-Lösung (HWL) enthaltenden Reduktionsmitteltank 1, der über eine Reduktionsmittelleitung 11 und eine als Pumpe ausgebildete Fördereinrichtung 8 das elektrisch ansteuerbare Ventil 16 mit der Harnstoff-Wasserlösung versorgt. Des weiteren ist ein Reaktor 3 vorgesehen, der über eine Leitung 2 mit Harnstoff-Wasserlösung aus dem Reduktionsmitteltank 1 versorgt wird. Des weiteren ist eine Rückführleitung 6 vorgesehen, die einen Bodenbereich des Reaktors mit einem oberen Bereich des Reduktionsmitteltanks 1 verbindet und zur Rückführung überschüssiger Harnstoff-Wasserlösung dient. Jenseits der Leitung 2 steht der Reaktor 3 über eine Leitung 9 mit einem Ammoniakspeicher 4 in Verbindung. Der Ammoniakspeicher 4 weist eine symbolisch mit einer Heizwendel dargestellten elektrische Heizvorrichtung 5 auf. An gegenüberliegenden Enden des Ammoniakspeichers 4 münden Abgasleitungen, auf der der Leitung 9 zugewandten Seite eine Teilstromzufuhrleitung 28 und auf der der Leitung 9 abgewandten Seite des Ammoniakspeichers 4 eine Teilstromabfuhrleitung 30. Die Leitung 28 zweigt an einer Stelle zwischen der Brennkraftmaschine und den Dosiereinrichtungen 15 bzw. 16 eine kleine Menge von Abgas ab, während die Teilstromabfuhrleitung 30 das Abgas, das den Ammoniakspeicher 4 passiert hat, wieder in die Abgasleitung 20 zurückführt, und zwar an einer Stelle zwischen der Abzweigung der Teilstromzufuhrleitung 28 von der Abgasleitung 20 und der Einmündung der Dosiereinrichtungen in die Abgasleitung 20. Auf der der Leitung 9 abgewandten Seite des Ammoniakspeichers 4 führt eine Leitung 10 vom Ammoniakspeicher zum Ventil 15, das elektrisch ansteuerbar ausgeführt ist. Des weiteren ist ein elektronisches Steuergerät 32 vorgesehen, das über einen Signaleingang 34 Informationen über Motorbetriebsdaten bzw. nicht näher dargestellte Sensorelemente erfasste physikalische und/oder chemische Parameter erhält. Über den Steuersignalausgang 36 werden gemäß einem im Steuergerät 32 abgelegten Algorithmus die Fördereinrichtung, die Dosiereinrichtungen 15 bzw. 16, die elektrische Heizvorrichtung 5 und gegebenenfalls weitere zusätzlich vorgesehene Ventilvorrichtungen angesteuert.

Die im Reduktionsmitteltank 1 befindliche HWL ist eine Substanz, die bei genügend hohen Temperaturen Ammoniak freisetzt. In einem normalen Betriebszustand (Normalbetrieb) wird die HWL über die Leitung 11, die Pumpe 8 und das Ventil 16 dem Abgastrakt zugeführt. In ausgewählten Betriebszuständen, jedoch nicht während eines Kaltstarts des Kraftfahrzeugs, wird die HWL-Lösung über die Leitung 2 dem Reaktor 3 zugeführt, indem ein nicht näher dargestelltes in der Leitung 2 angeordnetes Ventil den Fluß der HWL vom Tank 1 in den Reaktor 3 steuert. Dabei ist der Tank als Drucktank ausgeführt. In dem Reaktor 3 wird durch Zuführung von Wärmeenergie (entweder über eine nicht näher dargestellte elektrische weitere Heizvorrichtung oder über eine Abgaswärme, die von der Abgasleitung abstrahlt und den Reaktor hinreichend erhitzt, soweit dieser in unmittelbarer Nähe der Abgasleitung 20 angeordnet ist) eine chemische Umwandlung angeregt, so dass in dem Reaktor 3 Ammoniak freigesetzt werden kann, das über die Leitung 9 dem Zwischenspeicher 4 zur Speicherung zugeführt wird. Im Reaktor 3 überschüssig vorhandene Harnstoff-Wasserlösung kann über die optionale Rückführleitung 6 in den Reduktionsmitteltank 1 zurückgeführt werden.

Beispielhaft werden im Folgenden mögliche Verfahrensschritte zum erfindungsgemäßen Betrieb des Reaktors 3 beschrieben: zunächst wird HWL durch ein positives Druckgefälle vom Tank 1 in den Reaktor 3 befördert. Das positive Druckgefälle wird entweder durch die Temperaturniveaus der Behälter bestimmt, oder durch eine nicht näher dargestellte Pumpe erzeugt. Anschließend wird dem Reaktor 3 beispielsweise thermische Energie zugefügt. Nicht näher in der Zeichnung dargestellte Schaltventile in den Leitungen 6 und 9, sowie ein in der Zeichnung nicht näher dargestelltes Rückschlagventil in Leitung 2 bewirken einen Druckanstieg im Reaktor. Bei den nun im Reaktor herrschenden Bedingungen zersetzt sich der Harnstoff in der HWL in Ammoniak und CO2. Bei einer Abkühlung oder Entspannung des Gemisches gast Ammoniak aus und wird durch Öffnen des nicht näher in der Zeichnung dargestellten Ventils in Leitung 9 in den Zwischenspeicher 4 überführt. Das im Reaktor 3 verbleibende Medium wird in den Tank 1 zurückgespült und der Vorgang kann von neuem beginnen.

Soll nun bei ausgewählten Betriebszuständen, insbesondere beim Kaltstart eines Fahrzeugs, das im Ammoniakspeicher gespeicherte Ammoniak anstelle der Harnstoff-Wasserlösung in den Abgastrakt eingeführt werden, wird der Zwischenspeicher über die Teilstromzufuhrleitung 28, die über ein nicht näher dargestelltes Ventil geöffnet wird, mit einem Abgasteilstrom beaufschlagt. Dann wird das Ammoniak aus dem Zwischenspeicher 4 über die Leitung 10 und das Dosierventil 15, das, vom Steuergerät 32 angesteuert, geöffnet wird, dem Abgastrakt zugegeben. Die Ammoniakfreisetzung aus dem Zwischenspeicher erfolgt im Bedarfsfall unter zusätzlicher Wärmezufuhr über die elektrische Heizvorrichtung 5. Der Zwischenspeicher ist hierbei beispielsweise durch einen Zeolithkörper gebildet, der Ammoniak in Abhängigkeit von der Temperatur einspeichert. Bei niedrigen Temperaturen wird das Ammoniak, das im Reaktor gebildet wird, eingespeichert. Im Bedarfsfall wird, wie oben bereits ausgeführt, dem Zwischenspeicher direkt (über die Heizvorrichtung 5) oder indirekt (über den Abgasteilstrom aus der Teilstromzufuhrleitung 28) Wärme zugeführt, so dass das Ammoniak wieder freigesetzt wird. Besonders vorteilhaft an dieser Ausführungsform ist, dass der Zeolithkörper das Ammoniak selektiv einspeichert, auch wenn das Ammoniak mit Wasser oder Kohlendioxid verunreinigt ist. Dadurch kann der Zwischenspeicher über den Abgasteilstrom aus der Teilstromzufuhrleitung 28 gleichzeitig gespült werden und die Bildung von Zwischenprodukten bei Abkühlung des Speichers wird vermieden.

In einer alternativen Ausführungsform kann an Stelle eines zeolithischen Materials auch ein Ammoniakkomplexe bildendes Salz zur Bildung eines Zwischenspeichers verwendet werden. In einer einfacheren Ausführungsform kann die Rückführleitung 6 auch weggelassen werden. Auch die Teilstromzufuhrleitung und die Teilstromabfuhrleitung 28 bzw. 30 können in einer einfachen Ausführungsform weggelassen werden. Die Austreibung des Ammoniaks geschieht dann ausschließlich über die elektrische Heizvorrichtung 5. In einer alternativen Ausführungsform kann in der Leitung 2 eine weitere Pumpe vorgesehen sein, um einen sicheren Transport von Harnstoff-Wasserlösung zum Reaktor zu gewährleisten. In einer weiteren Ausführungsform kann diese Pumpe als Dosierpumpe ausgebildet sein, ebenso kann die Pumpe 8 als Dosierpumpe ausgebildet sein, so dass die Dosiereinrichtung 16 nicht als Ventil ausgebildet werden muss, sondern lediglich eine Düse ist, die mit ihrer Öffnung in den Abgastrakt hineinragt. In einer weiteren alternativen Ausführungsform kann in der Leitung 6 ein elektrisch ansteuerbares Ventil vorgesehen sein, das über den Signalausgang 36 des Steuergeräts 32 gesteuert wird. Diese Steuerung bzw. Regelung kann in Abhängigkeit von Temperatur und/oder HWL-Lösungs-Füllhöhe im Reaktor 3 erfolgen, wobei Temperatur und Füllstandshöhe über entsprechende Sensoren bestimmt werden und als Messinformation über den Signaleingang 34 des Steuergeräts 32 in die Steuerung der Abgasnachbehandlungsanordnung einfließen. In einer weiteren alternativen Ausführungsform können die Teilstromzufuhr- bzw. Abfuhrleitungen 28 bzw. 30 mit elektrisch ansteuerbaren Ventilen versehen sein. In einer weiteren alternativen Ausführungsform bestehen die Dosiereinrichtung 15 und/oder die Dosiereinrichtung 16 lediglich aus einer stets geöffneten Düse, so dass die Steuerung der Zufuhr des ersten Hilfsmittels über die Dosiereinrichtung 15 bzw. die Zufuhr des zweiten Hilfsmittels über die Dosiereinrichtung 15 ausschließlich über die Dosierpumpe 8 bzw. die Steuerung der elektrischen Heizvorrichtung und/oder die Abgaszufuhr über die Teilstromzufuhrleitung 28 erfolgt. In einer einfachen alternativen Ausführungsform kann der Ammoniakspeicher 4 auch lediglich durch einen Tank gebildet werden, aus dem die Ausleitung des Ammoniaks dann ohne elektrische Heizvorrichtung 5 ausschließlich über austreibendes Abgas aus der Teilstromzufuhrleitung 28 erfolgt. In einer weiteren alternativen Ausführungsform braucht der Tank nicht als ständig unter Druck stehender Tank ausgeführt sein. In diesem Fall ist entweder eine weitere Dosierpumpe in der Leitung 2 vorgesehen, oder die Leitung 2 führt nicht direkt in den Tank, sondern ist an der Leitung 11 hinter der Dosierpumpe 8 angeschlossen. In einer weiteren alternativen Ausführungsform wird das Ammoniak über die Leitung 30 in den Abgastrakt eingebracht, und die Leitung 10 kann entfallen. In einer weiteren alternativen Ausführungsform kann vorgesehen sein, das erste und das zweite Hilfsmittel an unterschiedlichen Stellen im Abgastrakt einzubringen, insbesondere nach respektive vor einem im Abgastrakt angeordneten Oxidationskatalysator.

## Patentansprüche

1. Verfahren zur Nachbehandlung des Abgases einer Brennkraftmaschine, bei dem im Abgas enthaltene Stickoxide selektiv katalytisch reduziert werden, wobei dem Abgas ein bevorratetes erstes Hilfsmittel zugeführt wird, **dadurch gekennzeichnet, daß** zumindest zeitweise eine Teilmenge des ersten Hilfsmittels einer chemischen Umwandlung in ein zweites Hilfsmittel unterworfen und das zweite Hilfsmittel in einem Zwischenspeicher (4) gespeichert wird, so daß zumindest zeitweise parallel oder alternativ zum ersten Hilfsmittel das zweite Hilfsmittel dem Abgas zugeführt werden kann.

2. Verfahren nach Anspruch 1, **dadurch gekennzeichnet, daß** in einem sogenannten Normalbetrieb der Brennkraftmaschine ausschließlich eine Zufuhr des ersten Hilfsmittels erfolgt und daß zu ausgewählten Zeitabschnitten außerhalb des Normalbetriebs, insbesondere während einer Kaltstartphase der Brennkraftmaschine, ausschließlich eine Zufuhr des zweiten Hilfsmittel erfolgt.

3. Verfahren nach Anspruch 2, **dadurch gekennzeichnet, daß** die chemische Umwandlung während des Normalbetriebs erfolgt.

4. Verfahren nach einem der vorhergehenden Ansprüche, **dadurch gekennzeichnet, daß** die chemische Umwandlung nur solange durchgeführt wird, bis der Zwischenspeicher gefüllt ist.

5. Verfahren nach einem der vorhergehenden Ansprüche, **dadurch gekennzeichnet, daß** das Volumen des Zwischenspeichers so bemessen ist, daß eine Menge an zweitem Hilfsmittel gespeichert werden kann, die den Bedarf an dem zweiten Hilfsmittel während einer Kaltstartphase der Brennkraftmaschine abdeckt.

6. Verfahren nach einem der vorhergehenden Ansprüche, **dadurch gekennzeichnet, daß** als erstes Hilfsmittel eine bei genügend hohen Temperaturen Ammoniak freisetzende Substanz verwendet wird.

7. Verfahren nach einem der vorhergehenden Ansprüche, **dadurch gekennzeichnet, daß** das zweite Hilfsmittel Ammoniak ist.

8. Verfahren nach einem der vorhergehenden Ansprüche, **dadurch gekennzeichnet, daß** als Zwischenspeicher ein Zeolithkörper oder ein ein Ammoniak-Komplex bildendes Salz verwendet wird.

9. Verfahren nach einem der vorhergehenden Ansprüche, **dadurch gekennzeichnet, daß** der Zwischenspeicher zu dessen Erwärmung beziehungsweise zur Austreibung des zweiten Hilfsmittels zeitweise mit Abgas beaufschlagt werden kann.

10. Anordnung zur Nachbehandlung des Abgases einer Brennkraftmaschine, mit der im Abgas enthaltene Stickoxide selektiv katalytisch reduziert werden können, wobei dem Abgas ein bevorratetes erstes Hilfsmittel zuführbar ist, **dadurch gekennzeichnet, daß** Mittel (3,6,9) vorgesehen sind, um zumindest zeitweise eine Teilmenge des ersten Hilfsmittels einer chemischen Umwandlung in ein zweites Hilfsmittel zu unterwerfen, und daß ein Zwischenspeicher (4) vorgesehen ist zur Speicherung des zweiten Hilfsmittels, so daß zumindest zeitweise parallel oder alternativ zum ersten Hilfsmittel das zweite Hilfsmittel dem Abgas zugeführt werden kann.

## Revendications

1. Procédé de post-traitement de gaz d'échappement d'un moteur à combustion interne dans lequel les oxydes d'azote contenus dans les gaz d'échappement sont réduits sélectivement par un procédé catalytique, un premier adjuvant de réserve étant ajouté aux gaz d'échappement,
**caractérisé en ce qu'**
une quantité partielle du premier adjuvant subit au moins temporairement une transformation chimique dans un deuxième adjuvant, et le deuxième adjuvant est stocké dans un réservoir intermédiaire (4) de manière à pouvoir être ajouté aux gaz d'échappement au moins temporairement parallèlement au premier adjuvant ou en variante par rapport à celui-ci.

2. Procédé selon la revendication 1,
**caractérisé en ce qu'**
en fonctionnement normal du moteur à combustion interne, seul le premier adjuvant est ajouté et, à des intervalles de temps sélectionnés en dehors du fonctionnement normal, notamment pendant une phase de démarrage à froid du moteur à combustion interne, seul le deuxième adjuvant est ajouté.

3. Procédé selon la revendication 2,
**caractérisé en ce que**
la transformation chimique se produit en fonctionnement normal.

4. Procédé selon l'une quelconque des revendications précédentes,
**caractérisé en ce que**
la transformation chimique n'est réalisée que jusqu'à ce que le réservoir intermédiaire soit rempli.

5. Procédé selon l'une quelconque des revendications précédentes,
**caractérisé en ce que**
le volume du réservoir intermédiaire est dimensionné de manière à pouvoir stocker une quantité de deuxième adjuvant qui couvre les besoins en deuxième adjuvant pendant une phase de démarrage à froid du moteur à combustion interne.

6. Procédé selon l'une quelconque des revendications précédentes,
**caractérisé en ce qu'**
une substance dégageant de l'ammoniac à des températures suffisamment élevées est utilisée comme premier adjuvant.

7. Procédé selon l'une quelconque des revendications précédentes,
**caractérisé en ce que**
le deuxième adjuvant est de l'ammoniac.

8. Procédé selon l'une quelconque des revendications précédentes,
**caractérisé en ce qu'**
on utilise un corps zéolithe ou un sel formant un complexe d'ammoniac comme réservoir intermédiaire.

9. Procédé selon l'une quelconque des revendications précédentes,
**caractérisé en ce que**
le réservoir intermédiaire peut être alimenté temporairement en gaz d'échappement pour son réchauffement et/ou pour l'extraction du deuxième adjuvant.

10. Dispositif de post-traitement de gaz d'échappement d'un moteur à combustion interne dans lequel des oxydes d'azote contenus dans les gaz d'échappement peuvent être réduits sélectivement par un procédé catalytique, un premier adjuvant de réserve pouvant être ajouté aux gaz d'échappement,
**caractérisé en ce que**
des moyens (3, 6, 9) sont prévus pour qu'une quantité partielle du premier adjuvant subisse au moins temporairement une transformation chimique dans un deuxième adjuvant, et un réservoir intermédiaire (4) est prévu pour stocker le deuxième adjuvant de manière à ce que ce dernier puisse être ajouté aux gaz d'échappement au moins temporairement parallèlement au premier adjuvant ou en variante par rapport à celui-ci.

## Claims

1. Method for the aftertreatment of the exhaust gas from an internal combustion engine, in which nitrogen oxides contained in the exhaust gas are selectively catalytically reduced, a stored first auxiliary agent being fed to the exhaust gas, **characterized in that** at least from time to time a partial quantity of the first auxiliary agent is subjected to a chemical conversion into a second auxiliary agent, and the second auxiliary agent is stored in a temporary store (4), so that at least from time to time the second auxiliary agent can be fed to the exhaust gas in parallel with or as an alternative to the first auxiliary agent.

2. Method according to Claim 1, **characterized in that** during what is known as normal operation of the internal combustion engine, only the first auxiliary agent is supplied, and **in that** at selected times outside of normal operation, in particular during a cold-start phase of the internal combustion engine, only the second auxiliary agent is supplied.

3. Method according to Claim 2, **characterized in that** the chemical conversion takes place during normal operation.

4. Method according to one of the preceding claims, **characterized in that** the chemical conversion is carried out only until the temporary store has been filled.

5. Method according to one of the preceding claims, **characterized in that** the volume of the temporary store is such that a quantity of second auxiliary agent which covers the demand for second auxiliary agent during a cold-start phase of the internal combustion engine can be stored.

6. Method according to one of the preceding claims, **characterized in that** the first auxiliary agent used is a substance which releases ammonia at sufficiently high temperatures.

7. Method according to one of the preceding claims, **characterized in that** the second auxiliary agent is ammonia.

8. Method according to one of the preceding claims, **characterized in that** the temporary store used is a zeolite body or a salt which forms an ammonia complex.

9. Method according to one of the preceding claims, **characterized in that** the temporary store is from time to time exposed to exhaust gas, in order to be heated and/or to force out the second auxiliary agent.

10. Arrangement for the after treatment of the exhaust gas from an internal combustion engine, by means of which nitrogen oxides contained in the exhaust gas can be selectively catalytically reduced, it being possible for a stored first auxiliary agent to be fed to the exhaust gas, **characterized in that** there are means (3, 6, 9) for at least from time to time subjecting a partial quantity of the first auxiliary agent to chemical conversion into a second auxiliary agent, and **in that** a temporary store (4) is provided for storing the second auxiliary agent, so that at least from time to time the second auxiliary agent can be fed to the exhaust gas in parallel with or as an alternative to the first auxiliary agent.
